# EUROPEAN PATENT APPLICATION

(11) **EP 2 436 256 A1**
(43) Date of publication of application: **04.04.2012**
(21) Application number: 11182972.7
(22) Date of filing: 27.09.2011
(51) Int. Cl.: A01D 34/74, A01D 41/14

(54) **Mower, particularly of the type towed by a tractor or the like**

(30) Priority: 01.10.2010 IT MO20100275
(71) Applicant: Comer Industries S.p.A., 20145 Milano (IT)
(72) Inventor: Codeluppi, Paolo, 42015 Correggio RE (IT)
(74) Representative: Modiano, Micaela Nadia

(57) **Abstract**

A mower (1), particularly of the type towed by a tractor or the like, comprising a supporting chassis (2) that can be associated with a tractor or the like, and at least one mowing assembly (5) supported by the supporting chassis (2) through supporting means (6) and movable with respect to the supporting chassis (2) along a direction which is substantially perpendicular to the ground of the crop to be mowed so as to vary the position of the mowing assembly (5) with respect to the supporting chassis (2) as a function of the geometric irregularities of the ground so as to keep the mowing assembly (5) in position at a preset height from the ground.

Electronically controlled damping means (24) being provided which are actuated with feedback and are functionally associated with the mowing assembly (5) and with the supporting chassis (2) to damp the relative motion between the mowing assembly (5) and the supporting chassis (2), sensor means (25) adapted to detect the variation of at least one value comprised among position, speed and acceleration of at least one of the mower (1), any one of its components and the ground of the crop to control the mowing assembly (5).

There are also control and management means (27) which are functionally connected to the sensor means (25), to read the measurements performed by the sensor means (25), and to the damping means (24), to vary their damping coefficient as a function of the measurements performed by the sensor means (25).

## Description

The present invention relates to a mower conditioner, particularly of the type towed by a tractor or the like.

Mowers of the known type, also known as cutter bars, are power-using machines used to cut and sometimes condition forage. In this latter case, one speaks of mower conditioners.

The forage is first cut by means of blades and then passed through a conditioning apparatus, which can be of the roller or of the whip type. This operation is useful to facilitate the drying of the cut product.

These power-using machines draw useful power during work from the tractor to which they are connected and can be divided into mounted mowers, front mowers and trailed mowers.

More precisely, mowers that are supported by the tractor in its rear part and perform cutting on the side of the tractor are known as mounted mowers; the ones that are supported by the tractor in its front part and perform cutting in the central portion of the tractor are known as front mowers; the ones connected to the tractor by means of a drawbar and provided with wheels for their support on the ground are known as trailed mowers.

For this latter type of mower there is a drawbar, which can be central or lateral depending on whether the coupling to the mower takes place at the center or on one of the two sides, and which connects the mower itself to the tractor.

Trailed mowers with central drawbars are furthermore preferable with respect to the other mowers of the known type because the mowing assembly, which is typically for professional use for challenging work for which the quality of the work obtained has an absolutely appreciated economic and performance-related value, being of the towed type, can be mounted in each instance on different tractors, ensuring operation even during downtimes of the tractors for example in connection with their maintenance.

Generally, trailed mowers of the known type are constituted by a chassis and a mowing conditioner assembly, also known as cutter bar. The former is connected to the tractor by means of the drawbar and supports the latter by means of a supporting mechanism, often constituted simply by an articulated quadrilateral in parallel to a spring with one end fixed to the chassis and the other to the mowing conditioner assembly.

Usually, the supporting mechanism makes it possible to adjust manually the inclination of the assembly and therefore the cutting height. A kinematic system for the transmission of power is fixed to the chassis, receives motion from the power take-off of the tractor and directs it to the mowing conditioner assembly, particularly to the blades and to any conditioner rollers present.

As regards the drawbar, it can rotate with respect to the mower so as to make it possible to work the ground on the side of the tractor. In this manner, mowers with central drawbars allow working on both sides of the tractor, minimizing the lot working time because it ensures greater flexibility in the management of work, other than those with lateral drawbars, which allow work on the opposite side with respect to the one on which the drawbar itself is arranged.

In fact, during forage cutting the cutter bar is brought to the margin of the field to be worked by the same tractor that is used during the subsequent cutting step. After arranging it conveniently with respect to the lot to be worked, one works the ground by subsequent and adjacent passes, working the lot in bands, in parallel or slightly overlapping strips so as to allow collection of all the product to be worked.

More specifically, the cutting step can be optimized by altering various factors such as, for example, the speed of travel of the tractor during work and the height at which cutting is performed.

The speed of travel of the tractor is closely connected to the working cost: in fact, by reducing the working time, i.e., by increasing the cutting speed, which currently is typically in the order of approximately 15/17 kilometers per hour, the cost per traveled kilometer is minimized.

By maintaining a constant cutting height equal to a preset value, it is possible to obtain the best compromise between maximization of cut product, i.e., of the yield of the cutting work performed, minimization of working time, and minimization of the quantity of pollutants in the cut product ensuring a good regrowth of the cut plant.

Substantially, there are three factors that affect the cutting step: the inclination of the mowing conditioner assembly, i.e., the inclination of the cut that the operator sets mechanically before starting to work the lot (this adjustment sets the theoretical cutting height, which would be obtained on absolutely flat surfaces), the preloading of the supporting mechanism, which can be adjusted manually (this must be the one best suited to the ground to be worked, because the force with which the mower conditioner assembly rests on the ground depends on it) and various secondary factors, such as the elasticity of the wheels on the ground and the total friction of the cutter bar (which are particularly influential during the first hours of activity because they can influence the yield of the mower on the field, but after the first run-in step their influence decreases).

Moreover, it must be considered that the work yield is strongly influenced by the type of ground on which one works: the more the ground is uneven, the worse the obtained results (with equal work speed). Sometimes, in order to improve the yield it is necessary to work the affected ground at lower speeds.

The main manufacturers of agricultural machines propose different solutions for optimizing the cutting step. More precisely, solutions applied directly to mowers have been developed which are adapted to keep the distance of the mower conditioner assembly from the ground close to the preset best compromise value.

For example, it is known to connect the mower conditioner assembly to the chassis by means of a pendulum-type joint provided with an oil-hydraulic suspension system. In this manner, the operator can adjust in any working step the weight of the mower conditioner assembly on the ground by operating the hydraulic distribution unit of the tractor. This system is managed by the operator and is without feedback.

Another example of a solution of a known type consists in providing the mower conditioner assembly with a special suspension arranged in the centerline of the mower, which makes it possible to have a constant ground force over the entire cutting length of the bar.

A further example of a solution of a known type consists in providing the mower with a three-dimensional adaptation to the ground, i.e., in defining a central drawbar that ensures a high transverse oscillation and works with an articulated system capable of changing the cutting angle according to the position in terms of height of the mower conditioner assembly.

More precisely, during an upward movement the mower conditioner assembly is oriented upward by approximately 5 degrees so as to improve the passing of an obstacle and during a downward movement the mower conditioner assembly is oriented downward by approximately 3 degrees so as to reduce the effect of the hop.

These solutions of a known type are not free from drawbacks, which include the fact that if the cutting step is performed at a speed of travel of the tractor which is higher than 15/17 kilometers per hour, and if the ground on which the work is performed has very uneven regions, such as for example humps or the like, because of the large size of the mower conditioner assembly inertial forces are established which lift all or at least part of the mower conditioner assembly from the ground, preventing the blades from performing an optimum cut in the region directly behind the hump.

Another drawback that is common to the solutions of the known type consists in that the devices with which the mower conditioner assemblies are provided are managed only by the operator by means of manual controls arranged in the tractor cab or directly on the mower, forcing the operator to intervene manually, adjusting said devices whenever the ground changes shape.

The aim of the present invention is to eliminate and overcome, respectively, the drawbacks and limitations cited above of the background art, by providing a mower, particularly of the type towed by a tractor or the like, that makes it possible to manage automatically the dynamic factors that affect the perpendicular motion to the ground of the mower conditioner assembly, in order to make working of the lots as uniform as possible.

Within this aim, an object of the present invention is to provide a mower that makes it possible to obtain tangible improvements during the cutting steps, independently of the ground being worked, both in terms of extension and in terms of unevenness, which is always present in grounds of the agricultural type.

Another object of the present invention is to develop a mower the characteristic elements of which are of limited size and are easy to wire and assemble and the operation of which does not depend on the mechanism for supporting the mower conditioner assembly on the chassis, so that they can be adapted easily to any mower conditioner assembly and chassis available on the agricultural machine market.

Another object of the present invention is to provide a mower that is economically competitive in terms of manufacturing costs and economically advantageous in terms of productivity if compared with a mower of the known type.

This aim and these and other objects that will become more apparent hereinafter are achieved by a mower, particularly of the type towed by a tractor or the like, comprising a supporting chassis which can be associated with a tractor or the like and at least one mowing assembly supported by said supporting chassis by supporting means and movable with respect to said supporting chassis along a direction which is substantially perpendicular to the ground of the crop to be mowed so as to vary the position of said at least one mowing assembly with respect to said supporting chassis as a function of the geometric irregularities of said ground so as to keep said at least one mowing assembly in position at a preset height from said ground, characterized in that it comprises electronically controlled damping means which are actuated with feedback and are functionally associated with said at least one mowing assembly and with said supporting chassis to damp the relative motion between said at least one mowing assembly and said supporting chassis, sensor means which are associated with said at least one mowing assembly and are adapted to detect the variation of at least one value selected among position, speed and acceleration of at least one of said mower, any one of its components and the ground of the crop to control said at least one mowing assembly and control and management means which are functionally connected to said sensor means, to read the measurements carried out by said sensor means, and to said damping means, to vary their damping coefficient as a function of the measurements performed by said sensor means.

Further characteristics and advantages of the present invention will become more apparent from the detailed description of a preferred but not exclusive embodiment of a mower, particularly of the type towed by a tractor or the like, illustrated by way of non-limiting example in the accompanying drawings, wherein:

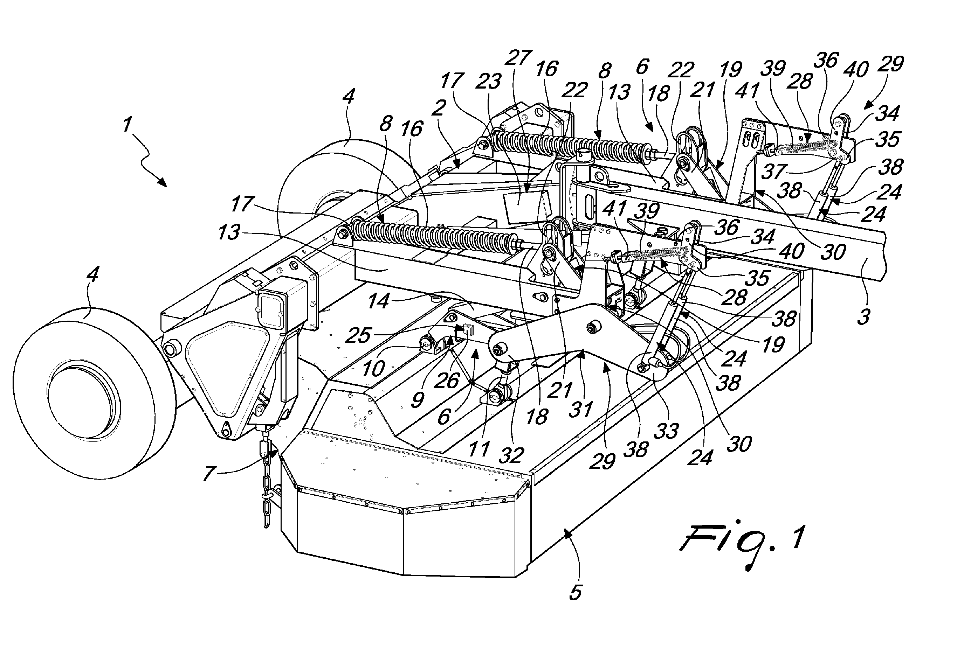

Figure 1 is a perspective view of an embodiment of a mower, particularly of the type towed by a tractor or the like, according to the invention;

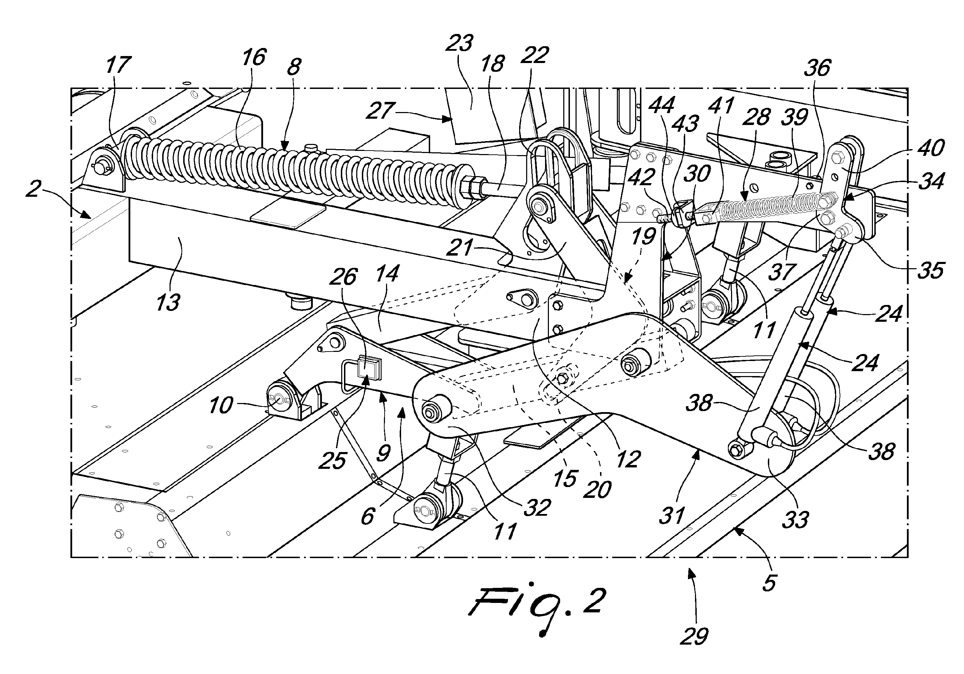

Figure 2 is an enlarged-scale detail view of the mower shown in Figure 1;

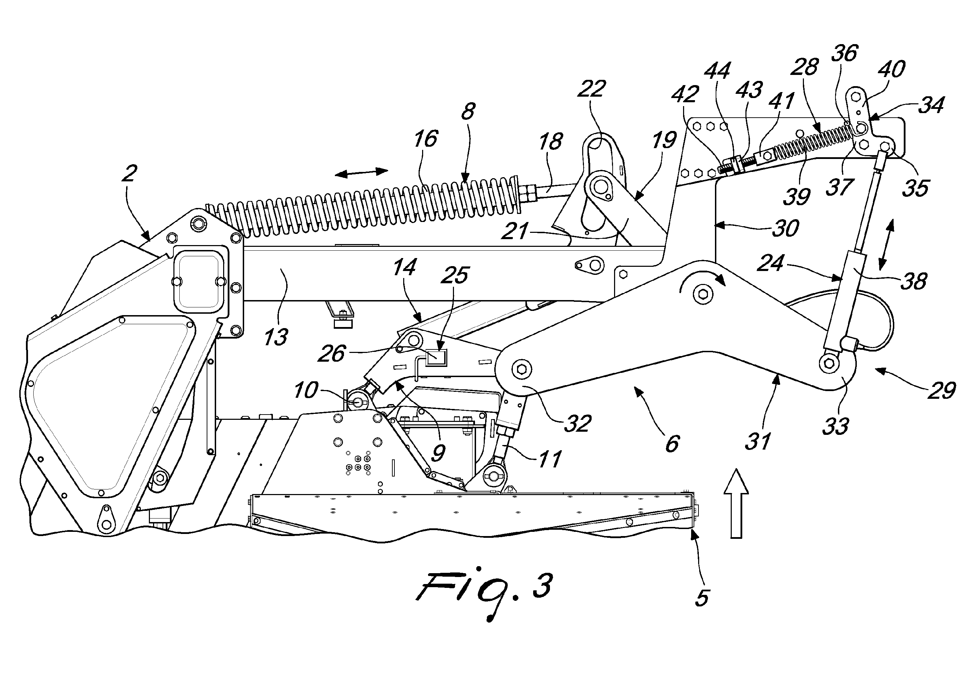

Figure 3 is an enlarged-scale side elevation detail view of the mower shown in Figure 1, with the mowing assembly arranged in a possible nominal operating position with respect to the supporting chassis;
Figure 4 is an enlarged-scale side elevation detail view of the mower shown in Figure 1, with the mowing assembly in motion with respect to the supporting chassis while the mower is climbing over a hump that lies on the path followed by the tractor;
Figure 5 is an enlarged-scale side elevation detail view of the mower shown in Figure 1, with the mowing assembly returning to its initial nominal operating position;
Figure 6 is an enlarged-scale side elevation detail view of the mower shown in Figure 1, with the mowing assembly in motion with respect to the supporting chassis during the descent of the mower into a depression that lies on the path followed by the tractor.

With reference to the figures, a mower, particularly of the type towed by a tractor or the like, generally designated by the reference numeral 1, comprises a supporting chassis 2 that defines a drawbar 3 that can be associated with a tractor or the like, not shown, so as to couple the mower 1 to the tractor, and is provided with wheels 4 adapted to support the mower 1 on the ground.

The illustrated mower 1 of the towed type has a drawbar 3 of the central type. In this manner, as will be better clarified hereinafter, the mower 1 has a mowing assembly 5 which, being associated with the wheels 4, which are separate from the wheels of the tractor, has travel dynamics, at right angles to the ground, that are substantially independent of the tractor that tows the mower 1.

Moreover, the mower 1 comprises at least one mowing assembly 5, which is supported at the top by the supporting chassis 2 through supporting means 6. The mowing assembly 5 is movable with respect to the supporting chassis 2 along a direction that is substantially perpendicular to the ground of the crop to be mowed. This movement is necessary in order to allow the mowing assembly 5 to vary its own position with respect to the supporting chassis 2 as a function of the geometric irregularities of the underlying ground, so as to stay at a preset height from the ground.

Besides the mowing assembly 5, the mower 1 can also comprise a conditioner assembly 7 arranged serially to said mowing assembly 5, as shown in the cited figures, making the mower a mower conditioner. Since the conditioner assembly 7 is optional, so as to generalize the mower 1, said mower will continue to be referred to as a mower and not as a mower conditioner.

As regards the mowing assembly 5, it is known per se and can be of various types. Since the inventive concept is independent of the type of mowing assembly used, said assembly will not be described further.

As previously mentioned, the mowing assembly 5 is supported on the supporting chassis 2 by supporting means 6 constituted, for example, by a structure of rigid bars arranged in an articulated quadrilateral in parallel to elastic means 8, which are associated with said supporting means 6 and are adapted to bear at least part of the weight of the mowing assembly 5.

More precisely, the articulated quadrilateral of the supporting means 6 is formed by a first rigid bar 9, which is associated at its ends with the mowing assembly 5, respectively, by means of a hinge 10 and by means of a connecting rod 11, which in turn is pivoted to the mowing assembly 5, and by a second rigid bar or a portion 12 of a beam 13 of the supporting chassis 2 opposite to the first rigid bar 9, by means of two hinges. The first rigid bar 9 and the portion 12 are mutually connected by means of a second rigid bar 14 and a third rigid bar 15 such as to close the articulated quadrilateral.

As concerns the elastic means 8, they comprise a spring 16, which is arranged substantially parallel to the articulated quadrilateral of the supporting means 6 and above it with respect to the mowing assembly 5.

The movement of the spring 16 is guided by the presence of an extensible stem with ends 17 and 18 associated, respectively, with the supporting chassis 2 with a hinge coupling and with a substantially L-shaped bracket 19 which is associated with the articulated quadrilateral. The spring is preloaded in compression.

More particularly, the first bracket 19 is pivoted, at its central portion, to the beam 13 of the supporting chassis 2, substantially between the ends of the portion 12, and has a first end portion 20 that is coupled to the third rigid rod 15 of the articulated quadrilateral by means of a sliding-block coupling, and a second end portion 21 that is pivoted to the spring-type shock absorber 16 and is accommodated so that it can slide in a cam-like guide 22 formed by the second rigid rod 13 of the articulated quadrilateral.

As shown in the cited figures, the cam-like guide 22 is formed outside the articulated quadrilateral and above it with respect to the mowing assembly 5.

This mechanism makes it possible to maintain the weight of the mowing assembly 5 on the ground almost constant, independently of its relative position to the supporting chassis 2. In fact, lifting of the mowing assembly 5 is matched by a rise of the first rigid bar 9 and, therefore, a rotation of the rigid bars 14 and 15 about the corresponding hinges connected to the supporting chassis 2.

This rotation causes an elongation of the spring 16, releasing it, and at the same time an increase of the arm of the force with which the spring-type shock absorber 16 turns the second rigid bar 14. If there is a lowering of the mowing assembly 5, the dynamics of the articulated quadrilateral are opposite to the ones described above.

In this manner, regardless of the vertical position of the mowing assembly 5, the torque that acts on the second rigid bar 14 by means of the spring-type shock absorber 16 remains substantially constant. By increasing the preloading of the spring-type shock absorber 16, the force exerted on the ground by the mowing assembly 5 decreases and vice versa if the preloading is decreased.

In the mower 1 there are two of said mechanisms, one for the left side and one for the right side, and both support the same mowing assembly.

Moreover, to be able to vary the cutting angle and height of the mowing assembly 5, the supporting means 6 comprise means for the manual adjustment of the length of the connecting rod 11 on which the inclination of the mowing assembly 5 with respect to the supporting chassis 2 depends.

Since the inertia of the mowing assembly 5 is such as to lead to the separation thereof from the ground, in case of strong vertical accelerations thereof, i.e., of sudden morphological variations of the ground, according to the invention there are electronically controlled damping means 24, which are actuated with feedback and functionally associated with the mowing assembly 5 and with the supporting chassis 2 to damp the relative motion between the mowing assembly 5 and the supporting chassis 2.

As will become more apparent hereinafter, the damping means 24 consist of electronically controlled dampers capable of generating, once the damping coefficient has been fixed, a force that contrasts the relative motion between the mowing assembly 5 and the supporting chassis 2 whose intensity is variable according to the speed of the mowing assembly 5 with respect to the supporting chassis 2. The damping coefficient is managed as a function of the irregularities of the ground, so as to ensure better adherence to the ground by the mowing assembly 5.

Moreover, according to the invention, there are sensor means 25 which are associated with the mowing assembly 5 and are adapted to detect the variation of at least one value comprised among position, speed and acceleration of at least one of the mower 1, any one of its components and/or the ground of the crop which is to be worked, has already been worked and/or is being worked.

More precisely, the sensor means 25 comprise at least one accelerometer 26, for example of the piezoelectric or other type, which is integral with the mowing assembly 5 and adapted to detect the component of the acceleration perpendicular to the ground to which the mowing assembly 5 is subjected.

The measured value is therefore an acceleration. In a possible variation of the sensor means 25, said measurement may relate to a different value such as, for example, speed and/or position.

Finally, according to the invention, there are control and management means 27, which consist for example of a control unit 23 installed on the mower 1 and are functionally connected to the sensor means 25, to read the measurements made by the sensor means 25, and to the damping means 24, to vary their damping coefficient as a function of the measurements made by said sensor means 25 and of the vertical speed values calculated by numeric integration by the control and management means 27.

Advantageously, means 28 for preventing the separation of the mowing assembly 5 from the ground are provided which are functionally associated with the damping means 24 and with the supporting chassis 2 to reposition the supporting means 6 by operating on the damping means 24 in such a position as to keep the mowing assembly 5 at the preset height from the ground.

For installation of the pumping means 24 and the separation preventing means 28 on the mower 1, there is at least one supporting frame 29, which can be associated with the mowing assembly 5 and with the supporting chassis 2 and supports both the damping means 24 and the separation preventing means 28.

This supporting frame 29 may have a variable shape depending on the geometry of the supporting chassis 2 and of the mowing assembly 5, because the inventive concept of the present invention is independent of the geometries of the components of the mower 1.

Generalizing, the supporting frame 29 comprises a plate 30 and a first lever 31, which are pivoted to each other so that the plate 30 can be fixed to the supporting chassis 2 and the first lever 31 can be associated, at its end portions 32, 33, respectively, with the mowing assembly 5 and with the damping means 24.

Moreover, there is a second lever 34 which is pivoted, at a central portion 37 thereof, to the plate 30 and is associated, at its ends 35 and 40, respectively, with the damping means 24 and with the separation preventing means 28.

More precisely, mechanical stroke limiting means 36 associated with the plate 30 are provided for the end 40 associated with the separation preventing means 28.

With reference to the proposed embodiment, the plate 30 may be substantially S-shaped, with one end of the S fixed to one of the beams 13 of the supporting chassis 2, and the first lever 31 may be substantially V-shaped, with the vertex of the V pivoted to the plate 30 at the hinge formed between the portion 12 and the third rigid rod 15 of the respective articulated quadrilateral.

As regards the second lever 34, it can be substantially L-shaped, with the vertex of the L, which defines its central portion 37, pivoted to the end of the plate 30 on the side opposite to the beam 13, and the mechanical stroke limiting means 36 comprise a block arranged on the plate 30 in the direction of the beam 13.

Advantageously, the damping means 24 comprise at least one damping cylinder 38, which contains at least one electric valve that is actuated by the control and management means 27 to vary the damping coefficient as a function of the value of the component of acceleration perpendicular to the ground measured by the respective accelerometer 26 and of the value of the speed calculated by numeric integration by the control and management means 27.

More precisely, there is a pair of damping cylinders 38 and each one of them is pivoted with its ends, respectively, to the first lever 31, on the side opposite to the mowing assembly 5, and to the second lever 34, on the side opposite to the separation preventing means 28.

The separation preventing means 28 comprise at least one elastic element, which consists for example of a helical spring 39, which is associated with a fixed point of the plate 30 and with the second lever 34, on the side opposite to the damping means 24.

More precisely, the helical spring 39, which works by traction, is coupled at one end to a block 41, the position of which, with respect to the plate 30, can be adjusted by means of a screw 42, which is jointly connected to the block 41 and is inserted so that it can slide in a flange 43 which is integral with the plate 30 and a ring 44 engaged with the screw 42 on the side opposite to the helical spring 39 relative to the flange 43.

For achieving optimum control over the mowing assembly 5, in the proposed embodiment there are at least two supporting frames 29, one for each beam 13, which are applied to the supporting chassis 2 on opposite sides with respect to the drawbar 3 so as to achieve optimum balancing of the mowing assembly 5.

Each supporting frame 39 is provided with a pair of damping cylinders 38, which operate substantially parallel to each other and are actuated by the control and management means 27, which manage independently the electric valves of each pair of damping cylinders 38 as a function of the values of the acceleration components perpendicular to the ground measured by the two respective accelerometers 26, each installed on one of the two articulated quadrilaterals with which the supporting chassis 2 is provided, and of the vertical speed values calculated by numeric integration by said control and management means 27.

The operation of the mower 1, particularly of the trailed type, is described hereinafter.

First of all, the supporting means 6 are conceived so as to avoid contact between the drawbar 3 and the beams 13, as well as between the drawbar 3 and the supporting frames 29, even in conditions of maximum rotation of the drawbar 3 with respect to the mower 1, during the working steps in which the mowing assembly 5 rests on the ground by means of adapted sliding supports.

The irregularities of the ground cause a movement thereof perpendicular thereto which is uneven and unpredictable for the operator, and this effect increases as the travel speed of the tractor increases.

The control and management means 27 are active during the entire period of operation of the mower 1 and intervene when there is a risk of separation of the mowing assembly 5 from the ground.

The accelerometers 26 arranged on the mowing assembly 5 provide continuously and in real time the conditions of unevenness of the ground on which the sliding supports rest. This information is processed by the control and management means 27 at regular intervals, for example every 10 milliseconds, and depending on the acceleration values detected and on the speeds calculated by numeric integration the same control and management means 27 impose a damping coefficient to each pair of damping cylinders 38, hindering or facilitating the relative motion between the supporting chassis 2 and the mowing assembly 5.

At the same time, the separation preventing means 28 perform the task of keeping the mowing assembly 5 in contact with the ground during the steps in which the inertia of the mowing assembly 5 would be such as to lift the mowing assembly 5 and therefore separate it from the underlying ground.

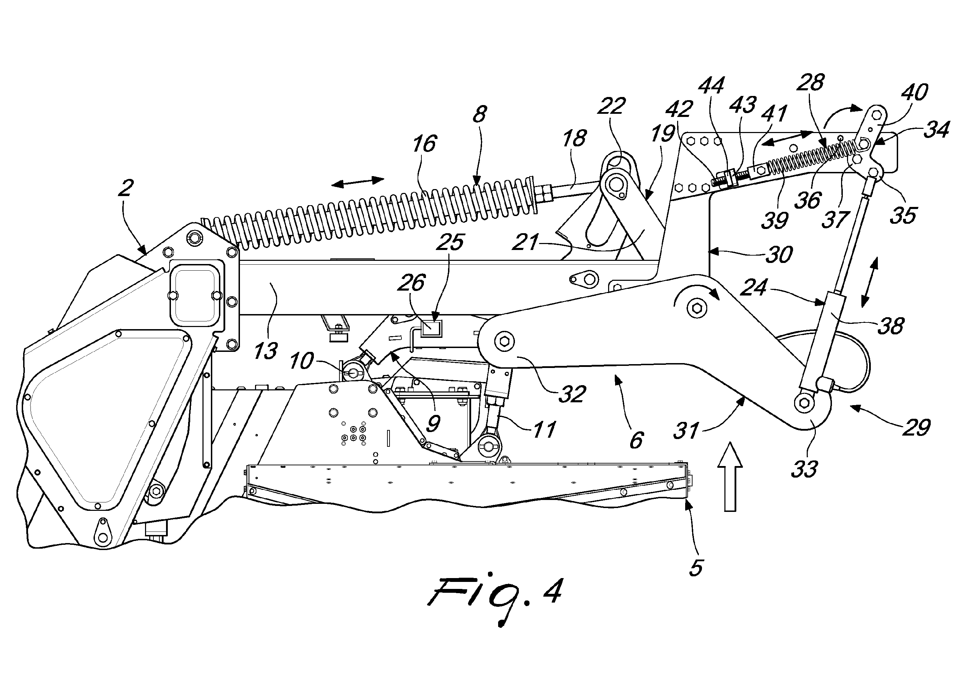

More precisely, with particular reference to Figures 4 to 5, during the rising step, the damping cylinders 38 are extended and the damping force increases as the relative speed between the mowing assembly 5 and the supporting chassis 2 increases. When the damping force is sufficient to overcome the preloading of the helical springs 39, such springs are elongated, accumulating elastic energy.

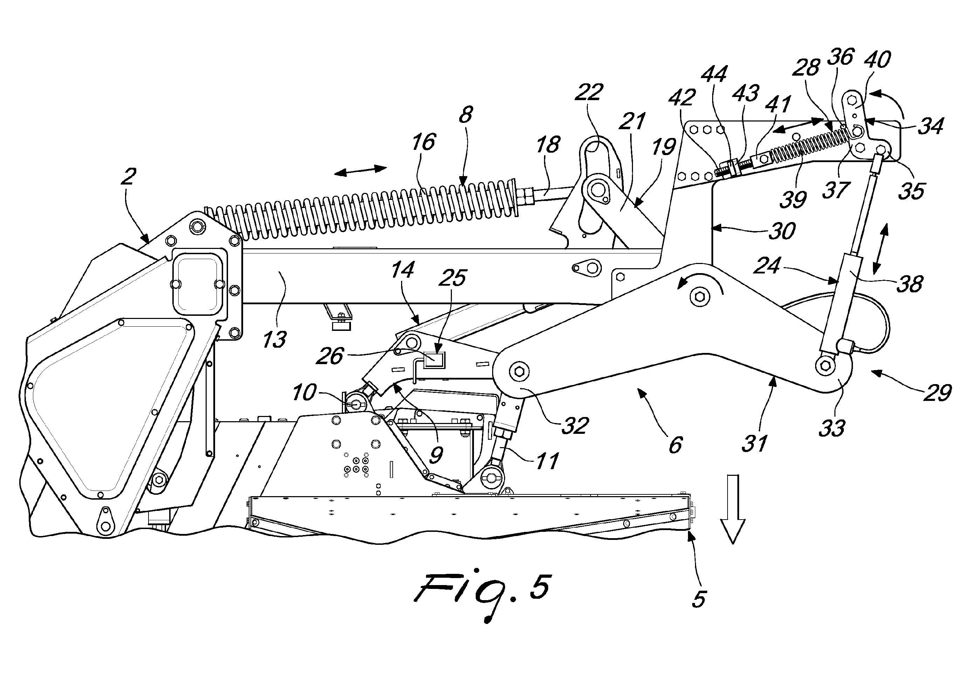

Proximate to the top of the unevenness of the ground, such as for example a hump, that has caused the mowing assembly 5 to lift, the damping cylinders 38 are still extended, but the damping force decreases because the relative speed between its two ends decreases. When its value decreases below the force exercised by the helical springs 39, which by now are extended, the tops of the damping cylinders 38 are pulled upward by the helical springs 39 until the respective second lever 34 is brought to the mechanical stroke limit, as shown in Figure 5.

Ground following is therefore ensured during the first step of the rise by the damping cylinders 38, whereas in the final part it is ensured by the presence of the separation preventing means 28.

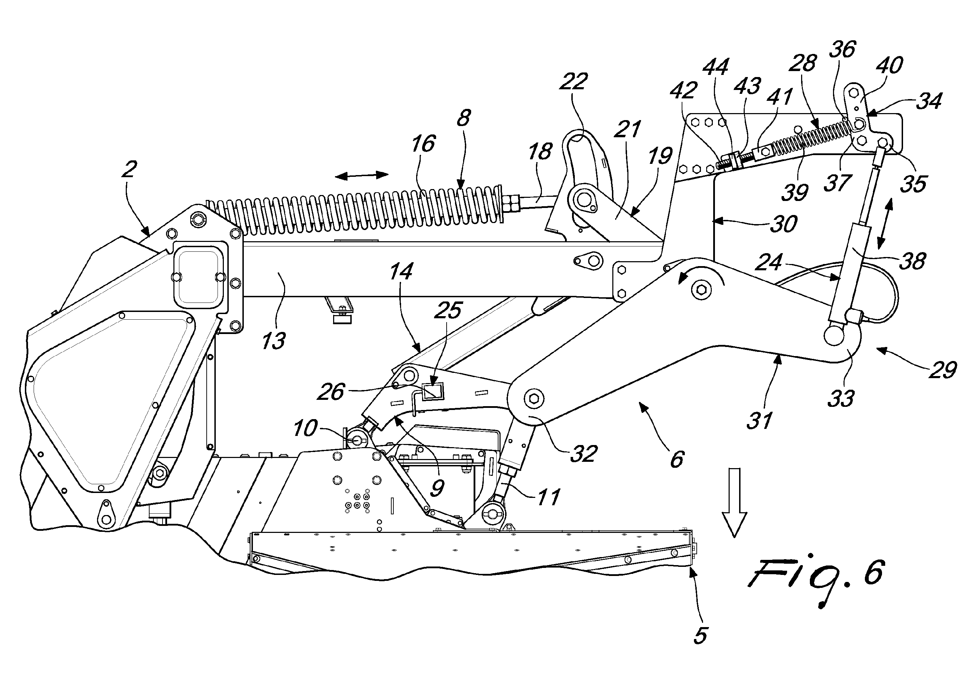

In a different manner, as shown in Figure 6, in the case of depressions present on the path followed by the tractor, the mowing assembly 5 follows the shape of the ground with a speed moderated by the damping cylinders 38, which are compressed, preventing the mowing assembly 5 from exerting an excessive pressure on the ground.

The method for performing cutting by means of the mower 1, according to the invention, does not change with respect to the working steps for a traditional mower and is composed of the following steps:
- the mower 1, towed by the tractor, is arranged at one end of the field, in a position that is as representative as possible for the subsequent work steps;
- by means of hydraulic actuation, the wheel supporting posts are lowered, to rest the mowing assembly 5 on the ground;
- the cutting height is adjusted;
- the field is worked.

Differently from the background art, in this last step the operator does not have to worry about the morphological irregularities of the ground encountered during work in order to adapt the damping of the mowing assembly 5, because it is adjusted automatically by the control and management means 27.

In practice it has been found that the mower, particularly of the type towed by a tractor or the like, according to the present invention fully achieves the intended aim and objects, since it makes it possible to solve the drawbacks of the background art, ensuring better ground following by the mowing assembly and avoiding at the same time an excessive pressure on the ground. The improvements relate to more product worked, reduction in working times, reduced contamination of the product, reduced wear of the sliding surfaces and less need for maintenance.

Another advantage of the mower, according to the present invention, is that the geometric, dimensional and operational characteristics of the supporting chassis and of the mowing assembly do not affect the operating principle of the damping means and of the separation preventing means, giving them the possibility to be installed on existing mowers, of the trailed type or non-trailed type, with the appropriate modifications, if necessary.

A further advantage of the mower, according to the present invention, is that the damping means and the separation preventing means operate automatically without requiring operator intervention.

In fact, the dynamic factors that affect the vertical motion of the mowing assembly are managed automatically so as to ensure the most uniform possible working of the lots. The presence of the separation preventing means, of the sensor means and of the electronically controlled damping means, which provide in real time the dynamics of the mower, makes it possible to achieve tangible improvements in the cutting steps, regardless of the ground both in terms of extension and in terms of irregularities, which are always present in land of the agricultural type.

In quantitative terms, the improving results lead to better working of the ground with equal travel speed of the tractor, or, with an equal surface of worked lot, to a shorter time required to work it. In this last case the advantage leads to a 40% saving of the time used for both of the tested profiles, with travel speeds in the order of approximately 21 kilometers per hour.

At first sight it might seem that the increase in weight on the ground obtained in the critical step would cause an increase in the consumption of the sliding surfaces, whereas in reality a greater force on the ground in the critical region actually avoids separation between the mowing assembly and the ground itself, with the consequent elimination of the impacts that would derive from the separation of the mowing assembly from the ground.

The solution, therefore, ensures a longer life of the sliding surfaces, with a direct decrease in time of the number of maintenance interventions.

The mower, particularly of the type towed by a tractor or the like, thus conceived is susceptible of numerous modifications and variations, all of which are within the scope of the appended claims.

For example, the mower, according to the present invention, can be integrated with additional elements and/or with new calculation processes aimed at improving the ground following of trailed or non-trailed mower conditioners and, more in general, of machines dedicated to the forage production chain.

More precisely, the data contained and managed by the control and management means can be integrated with information related to the working data and adjustments available to the operator in the tractor cab, with storage of working data by georeferencing the activity performed and implementing logic systems for self-adaptation and automatic control of the adjustment of the height from the ground.

Moreover, all the details may be replaced with other technically equivalent elements.

In practice, the materials used, as long as they are compatible with the specific use, as well as the contingent shapes and dimensions, may be any according to the requirements and the state of the art.

The disclosures in Italian Patent Application No. MO2010A000275 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A mower (1), particularly of the type towed by a tractor or the like, comprising a supporting chassis (2) which can be associated with a tractor or the like, and at least one mowing assembly (5) supported by said supporting chassis (2) by supporting means (6) and movable with respect to said supporting chassis (2) along a direction which is substantially perpendicular to the ground of the crop to be mowed for varying the position of said at least one mowing assembly (5) with respect to said supporting chassis (2) as a function of the geometric irregularities of said ground so as to keep said at least one mowing assembly (5) in position at a preset height from said ground, **characterized in that** it comprises electronically controlled damping means (24) which are actuated with feedback and are functionally associated with said at least one mowing assembly (5) and with said supporting chassis (2) for damping the relative motion between said at least one mowing assembly (5) and said supporting chassis (2), sensor means (25) which are associated with said at least one mowing assembly (5) and are adapted to detect the variation of at least one value comprised among position, speed and acceleration of at least one of said mower (1), any one of its components and the ground of the crop to control said at least one mowing assembly (5) and control and management means (27) which are functionally connected to said sensor means (25), to read the measurements performed by said sensor means (25), and to said damping means (24), to vary their damping coefficient as a function of the measurements performed by said sensor means (25).

2. The mower (1) according to claim 1, **characterized in that** it comprises means (28) for preventing the separation of said at least one mowing assembly (5) from said ground, said separation preventing means (28) being functionally associated with said damping means (24) and with said supporting chassis (2) to control the movement of said supporting means (6), by operating on said damping means (24), so as to keep said at least one mowing assembly (5) at a preset height from said ground.

3. The mower (1) according to one or more of the preceding claims, **characterized in that** said sensor means (25) comprise at least one accelerometer (26) jointly connected to said at least one mowing assembly (5) and adapted to detect the component perpendicular to the ground of the acceleration to which said at least one mowing assembly (5) is subjected.

4. The mower (1) according to one or more of the preceding claims, **characterized in that** it comprises at least one supporting frame (29) which can be associated with said at least one mowing assembly (5) and with said supporting chassis (2) and supports said damping means (24) and said separation preventing means (28).

5. The mower (1) according to one or more of the preceding claims, **characterized in that** said at least one supporting frame (29) comprises a plate (30) and a first lever (31), which are pivoted to each other, said plate (30) being fixable to said supporting chassis (2) and said first lever (31) being able to be associated, at its end portions (32, 33), with said at least one mowing assembly (5) and with said damping means (24), respectively.

6. The mower (1) according to one or more of the preceding claims, **characterized in that** it comprises a second lever (34) which is pivoted, at a central portion (37) thereof, to said plate (30) and is associated, at its ends (35, 40), respectively with said damping means (24) and with said separation preventing means (28), for said end (35) of said second lever (34) that is associated with said separation preventing means (28) mechanical stroke limiting means (36) being provided which are associated with said plate (30).

7. The mower (1) according to one or more of the preceding claims, **characterized in that** said damping means (24) comprise at least one damping cylinder (38), which contains at least one electric valve actuated by said control and management means (27) to vary the damping coefficient as a function of the value of the vertical component of acceleration measured by said at least one accelerometer (26) and of the value of the speed calculated by numeric integration by said control and management means (27), said at least one damping cylinder (38) being pivoted with its ends, respectively, to said first lever (31), on the side opposite to said at least one mowing assembly (5), and to said second lever (34), on the side opposite to said separation preventing means (28).

8. The mower (1) according to one or more of the preceding claims, **characterized in that** said separation preventing means (28) comprise at least one elastic element (39) associated with a fixed point of said plate (30) and with said second lever (34), on the side opposite to said damping means (24).

9. The mower (1) according to one or more of the preceding claims, **characterized in that** it is of the towed type with said supporting chassis (2) provided with wheels (4) and with a drawbar (3) connectable to said tractor, and **in that** it comprises at least two of said supporting frames (29) which are applied to said supporting chassis (2) on opposite sides with respect to said drawbar (3), each frame being provided with a pair of said damping cylinders (38), which operate substantially parallel to each other, said control and management means (27) managing independently the electric valves of each pair of said hydraulic cylinders (38) as a function of the values of the vertical acceleration components measured by the respective accelerometers (26) and of the vertical speed values calculated by numeric integration by said control and management means (27).
